Europäisches Patentamt

European Patent Office

Office européen des brevets

(11) Publication number: **0 449 252 A1**

# EUROPEAN PATENT APPLICATION

(21) Application number: **91104879.1**

(22) Date of filing: **27.03.91**

(51) Int. Cl.5: **G11B 11/10, G11B 13/04, H01F 10/16**

(30) Priority: **29.03.90 JP 82342/90**
**12.06.90 JP 153559/90**

(43) Date of publication of application:
**02.10.91 Bulletin 91/40**

(84) Designated Contracting States:
**AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Shindo, Kiyotaka, MITSUI PETROCHEMICAL IND., LTD.**
**580-32, Aza-Taku 2-gou, Nagaura Sodegaura-cho, Kimitsu-gun, Chiba 299-02(JP)**
Inventor: **Tsuzukiyama, Koji, MITSUI PETROCHEMICAL IND., LTD.**
**580-32, Aza-Taku 2-gou, Nagaura Sodegaura-cho, Kimitsu-gun, Chiba 299-02(JP)**
Inventor: **Mizumoto, Kunihiko, MITSUI PETROCHEMICAL IND., LTD**
**580-32, Aza-Taku 2-gou, Nagaura Sodegaura-cho, Kimitsu-gun, Chiba 299-02(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

(54) **Magneto-optical recording media.**

(57) Since magneto-optical recording layers in the magneto-optical recording media of the present invention are laminated bodies having periodical structures wherein two types of recording films having specific composition are alternately laminated, there can be obtained magneto-optical recording media having such magneto-optical recording multilayers that as a whole are excellent in magnetic characteristics such as coercive force Hc, residual magnetization and saturation magnetization, and, furthermore, impart wide polar magneto-optical Kerr rotation angle even in response to reproduction light of a short wavelength.

EP 0 449 252 A1

## FIELD OF THE INVENTION

This invention relates to a magneto-optical recording medium having a magneto-optical recording multilayer and more particularly to a magneto-optical recording medium having a magneto-optical recording multilayer which has excellent oxidation resistance, heat stability and magnetic characteristics such as coercive force, residual magnetization and saturation magnetisation, and, moreover, exhibits a wide polar magneto-optical Kerr rotation angle even in response to reproduction light of a short wavelength, and hence renders perpendicular magnetic recording possible.

## BACKGROUND OF THE INVENTION

Amorphous alloy films composed of alloys consisting of transition metals such as iron (Fe) and cobalt (Co) and rare earth elements such as as terbium (Tb) and gadolinium (Gd) are known to have easy directions of magnetization perpendicularly to the film surface and are capable of forming in the film magnetized throughout its surface in one vertical direction small inverse magnetic domains whose directions of magnetization are opposite thereto. It becomes possible to input digital signals into the aforementioned amorphous alloy films by means of detecting presence or non-presence of such inverse magnetic domains as mentioned above with "1 and "0" respectively.

As conventional typical examples of the material usable for such magneto-optical recording medium as mentioned above, there can be mentioned amorphous alloys comprising rare earth elements such as Gd, Tb, and Dysprosium (Dy) and transition metals such as Fe and Co. However, the rare earth elements and Fe which constitute said amorphous alloy films have such properties that they are readily oxidized and produce oxides by readily reacting with oxygen in air.

If such oxidation has progressed to an extent that the film is corroded or develops pinholes in it due to corrosion, dropouts of signals tend to be caused. Further, particularly in cases where rare earth elements are oxidized, the C/N ratio decreases in consequence of the decreases in coercive force Hc and polar magneto-optical Kerr rotation angle of remanence coercivity. These problems inevitably arise so long as rare earth elements are utilized as components of the magnetic recording layer of the magneto-optical recording medium.

The mechanism of oxidative deterioration of the magneto-optical recording medium composed of amorphous alloy films containing the aforementioned transition metals and rare earth elements is discussed, for example, in Journal of Applied Magnetism Society of Japan, Vol. 9, No. 2, pp. 93-96, which cites such three kinds of oxidative deterioration as enumerated below.

a) Development of pinholes

By development of pinholes is meant formation of pinholes in the amorphous alloy film. Corrosion of this type develops mainly in a highly humid atmosphere, and it progresses at a marked rate, for example, in the case of Tb-Fe system or Tb-Co system.

b) Surface oxidation

An oxide layer is formed on the surface of amorphous alloy film, with the result that polar magneto-optical Kerr rotation angle $\theta k$ of the film undergoes time-related changes and eventually decreases to a great extent.

c) Selective oxidation of rare earth metals

Rare earth metals present in the amorphous alloy film are selectively oxidized, with the result that coercive force Hc of the film comes to change with time to a great extent.

Said formation of pinholes or surface corrosion of the amorphous alloy film can be prevented by means of incorporating into such film an element or elements capable of forming a passive state outer layer such as Ti, Cr, Al or the like over the film or an inert element or inert elements such as Pt, Pd or the like. The effect of such addition has been verified in case the layer has a relatively large thickness. However, the addition of the aforementioned element or elements necessitated co-use of anti-oxidant protective layer, since the use of such element or elements alone in many cases impairs polar magneto-optical Kerr rotation angle, and, in particular, in case the layer has the thickness of 500 Å or less, the desired effect could not be attained at all. The process proposed for providing amorphous alloy film with such anti-oxidant protective

2

layer as mentioned above had such drawbacks that the anti-oxidant protective layer by itself is costly and the production thereof is time-consuming as well as troublesome. To be more of a problem was the fact that the protective layer thereby formed not necessarily prevented oxidative deterioration of the amorphous alloy film sufficiently.

To solve such problems accompanied by oxidative deterioration, there have been disclosed in EP Publication No. 304,873 that Co/Pt superlattice metallic thin film constructed by alternately laminating Co layers and Pt layers or Co/Pd superlattice metallic thin film constructed by alternately laminating Co layers and Pd layers shows excellent oxidation resistance and has excellent magneto-optical properties when the whole thickness is thin.

In order to alter magnetization in the magneto-optical recording medium, it is requisite that the recording layer is locally heated to a level above the Curie temperature (Curie point). Therefore, the lower the Curie point of the recording layer, the better improved the signal transmission speed will be obtained. As a means to lower the Curie point, there has been conceived such an idea that a third element is incorporated into the recording layer. However, depending on the kind of element, such means lowered the heat stability of the recording layer, accordingly often creating a cause of noises and/or deteriorating coercive force Hc and squareness ratio due to diffusion of metal ions or crystallization of the components constituting the recording layer.

To resolve such problems as cited above, there has been disclosed, for example, a magneto-optical recording medium having as its recording layer an artificial superlattice metallic film or a compositionally modulated multilayered metallic film constructed by alternately laminating two different kinds of layers, one of which being an alloy layer composed of Co and another metal (at least one element selected from group consisting of P, Ti, V, Ni, Ga, Ge, B, C, Si, Fe and Cu) added thereto up to a certain extent, and the other being Pd layer, in Japanese Laid Open Patent Publication No. 1-98144. Furthermore, there has been disclosed in Japanese Laid Open Patent Publication No. 1-162257 a magneto-optical recording medium having as its magnetic recording layer a metallic film which is constructed alternately laminating Co type alloy layers composed of Co and another metal (at least one element selected from group consisting of B, C, Al, Si, P, Ti, V, Fe, Ni, Cu, Ga, Ge, Zr, Nb, Mo, In, Sn, Sb, Gd, Tb, Dy and Ta) added thereto up to a certain extent, and Pt layers. However, even such magnetic recording layers as described in the aforementioned Laid Open Patent Publications were not necessarily satisfactory with respect to magnetic characteristics and the C/N ratio.

## OBJECT OF THE INVENTION

It is an object of the present invention to provide magneto-optical recording media which have magneto-optical recording multilayers excellent in oxidation resistance, heat stability and magnetic characteristics such as coercive force Hc, residual magnetization and saturation magnetization, and capable of imparting wide polar magneto-optical Kerr rotation angles even in response to reproduction light of a short wavelength and permitting perpendicular magnetic recording.

## SUMMARY OF THE INVENTION

The first magneto-optical recording media of the present invention having a magneto-optical recording layer being a laminated body having a periodical structure wherein the first film and the second film, varying from each other in composition, are laminated alternately, and are characterized in that the first film comprises Pt and the second film comprises $CoM^1$ wherein $M^1$ represents Pd, Pt, Cr or Hf.

The second magneto-optical recording media of the present invention having a magneto-optical recording layer being a laminated body having a periodical structure wherein the first film and the second film, varying from each other in composition, are laminated alternately, and are characterized in that the first film comprises Pt and the second film comprises $CoM^2M^3$ wherein $M^2$ represents at least one element selected from among Pt and Pd, and $M^3$ represents at least one element selected from the group consisting of the undermentioned elements (a) to (h):
(a) 3d transition elements other than Co,
(b) 4d transition elements other than Pd,
(c) 5d transition elements other than Pt,
(d) Rare earth elements,
(e) IIIB Group elements,
(f) IVB Group elements,
(g) VB Group elements, and

(h) VIB Group elements.

The third magneto-optical recording media of the present invention having a magneto-optical recording layer being a laminated body having a periodical structure wherein the first film and the second film, varying from each other in composition, are laminated alternately, and are characterized in that the first film comprises $PtM^4$ wherein $M^4$ represents at least one element selected from among Pd and Au and the second film comprises $CoM^5$ wherein $M^5$ represents at least one element selected from the group consisting of the undermentioned elements (a) to (h):

(a) 3d transition elements other than Co,
(b) 4d transition elements,
(c) 5d transition elements,
(d) Rare earth elements,
(e) IIIB Group elements,
(f) IVB Group elements,
(g) VB Group elements, and
(h) VIB Group elements.

The fourth magneto-optical recording media of the present invention having a magneto-optical recording layer being a laminated body having a periodical structure wherein the first film and the second film, varying from each other in composition, are laminated alternately, and are characterized in that the first film comprises Pd, and the second film comprises $CoM^6$ wherein $M^6$ represents at least one element selected from among Gd, Dy, Tb, Nd, Cr, Zr, Hf, Ta and Al.

The fifth magneto-optical recording media of the present invention having a magneto-optical recording layer being a laminated body having a periodical structure wherein the first film and the second film, varying from each other in composition, are laminated alternately, and are characterized in that the first film comprises $CoPtM^7$ wherein $M^7$ representsat least one element selected from the group consisting of the undermentioned elements (a) to (h):

(a) 3d transition elements other than Co,
(b) 4d transition elements,
(c) 5d transition elements other than Pt,
(d) Rare earth elements,
(e) IIIB Group elements,
(f) IVB Group elements,
(g) VB Group elements, and
(h) VIB Group elements, and the second film comprises $CoPtM^8$ wherein $M^8$, which is different from the above-mentioned $M^7$, represents at least one element selected from the group consisting of the undermentioned elements (a) to (h):

(a) 3d transition elements other than Co,
(b) 4d transition elements,
(c) 5d transition elements other than Pt,
(d) Rare earth elements,
(e) IIIB Group elements,
(f) IVB Group elements,
(g) VS Group elements
(h) VIB Group elements.

The sixth magneto-optical recording media of the present invention having a magneto-optical recording layer being a laminated body having a periodical structure wherein the first film and the second film, varying from each other in composition, are laminated alternately, and are characterized in that the first film comprises $PtM^9$ wherein $M^9$ represents at least one element selected from the group consisting of the undermentioned elements (a) to (h):

(a) 3d transition elements,
(b) 4d transition elements,
(c) 5d transition elements other than Pt,
(d) Rare earth elements,
(e) IIIB Group elements,
(f) IVB Group elements,
(g) VS Group elements, and
(h) VIB Group elements, and the second film consists essentially of Co.

The seventh magneto-optical recording media of the present having a magneto-optical recording layer being a laminated body having a periodical structure wherein the first film and the second film, varying from each other in composition, are laminated alternately, and are characterized in that the first and second film comprises at least one element selected from the group consisting of Fe and Co, at least one element selected from the group consisting ofPt, Pd and Au, and at least one element selected from the group consisting of the undermentioned elements (a) to (h):

(a) 3d transition elements other than Fe and Co,
(b) 4d transition elements other than Pd,
(c) 5d transition elements other than Pt and Au,
(d) Rare earth elements,
(e) IIIB Group elements,
(f) IVB Group elements,
(g) VS Group elements, and
(h) VIB Group elements.

Since the magneto-optical recording media of the present invention having a magneto-optical recoding layer,said magneto-optical recording layer being a laminated body having periodical structures wherein the first film and the second film, varying from each other in composition, are laminated alternately, there can be obtained magneto-optical recording media having magneto-optical recording multilayers excellent in oxidation resistance, heat stability and excellent magnetic characteristics such as coercive force Hc, residual magnetization and saturation magnetization, capable of imparting wide polar magneto-optical Kerr rotation angles even in response to reproduction light of a short wavelength, and permitting perpendicular magneto-optical recording.

## DETAILED DESCRIPTION OF THE INVENTION

The magneto-optical recording media of the present invention will now be illustrated below in detail.

A magneto-optical recording layer of the magneto-optical recording medium of the invention is formed as a laminated body comprising two films varying in composition from each other.

Hereinafter, one of the above-mentioned two films forming the multilayered magneto-optical recording layer of the magneto-optical recording medium of the invention is called the first film (first layer), and the other of the aforementioned two films forming the said multilayered magneto-optical recording layer is called the second film (second layer).

This multilayered magneto-optical recording layer comprising a laminated body formed from the first and second films is a film with a magnetization with easy axis perpendicular to the film, said first film varying in composition from said second film. The magneto-optical recording medium of the invention having such multilayered magneto-optical recording layer as mentioned above will be illustrated in more detail according to seven embodiments thereof.

In the first magneto-optical recording medium of the invention, the first film comprises Pt and the second film comprises $CoM^1$ alloy wherein $M^1$ represents Pd, Pt, Cr or Hf.

The first film used in the first magneto-optical recording medium may contain also amounts of other metals in addition to Pt. Such other metals as may be used herein include concretely 3d transition elements such as Sc, Ti, V, Cr, Mn, Fe, Co, Ni, Cu and Zn; 4d transition elements such as Y, Zr, Nb, Mo, Tc, Ru, Rh, Pd, Ag and Cd; 5d transition elements such as Hf, Ta, W, Re, Os, Ir, Pt, Au and Hg; rare earth elements such as Gd, Tb, Dy, Ho, Er, Yb, Lu, La, Ce, Pr, Nd, Pm, Sm and Eu; IIIB Group elements such as B, Al, Ga, In and Tl; IVB Group elements such as C, Si, Ge, Sn and Pb; VB Group elements such as N, P, As, Sb and Bi; and VIB Group elements such as S, Se, Te and Po. Among said elements, Cr, Hf, Ti, Zr and Ta are preferably used.

These metals as exemplified above may be contained in the first film in the proportion of not more than 20 atom%, preferably not more than 10 atom%.

As the $CoM^1$ alloy forming the second film of the first magneto-optical recording medium, there may be mentioned such as alloy as Co-Pd alloy, Co-Pt alloy, Co-Cr or Co-Hf alloy.

In the case where the second film used is the Co-Pd alloy of the formula $Co_xPd_{100-x}$, it is desirable that x (atom%) in said formula is 50-99.9 atom%, preferably 70-98 atom%.

Where the second film used is the Co-Pt alloy of the formula $Co_xPt_{100-x}$, it is desirable that x (atom%) in said formula is 50-99.9 atom%, preferably 70-98 atom%.

Where the second film used is the Co-Cr alloy of the formula $Co_xCr_{100-x}$, it is desirable that x (atom%) in said formula is 70-99.9 atom%, preferably 80-98 atom%.

Where the second film used is the Co-Hf alloy of the formula $Co_xHf_{100-x}$, it is desirable that x (atom%) in said formula is 70-99.9 atom%, preferably 80-98 atom%.

The second film may contain also small amounts of other metals in addition to Co, Pd, Pt, Cr or Hf.

Such metals as may be used herein include concretely 3d transition elements such as Sc, Ti, V, Mn, Fe, Ni, Cu and Zn; 4d transition elements such as Y, Zr, Nb, Mo, Tc, Ru, Rh, Ag and Cd; 5d transition elements such as Ta, W, Re, Os, Ir, Au and Hg; rare earth elements such as Gd, Tb, Dy, Ho, Er, Yb, Lu, La, Ce, Pr, Nd, Pm, Sm and Eu; IIIB group elements such as B, Al, Ga, In and Tl, IVB Group elements such as C, Si, Ge, Sn and Pb; VB Group elements such as N, P, As, Sb and Bi; and VIB Group elements such as S, Se, Te and Po.

These metals as exemplified above may also be contained in the second film in the proportion of not more than 20 atom%, preferably not more than 10 atom%.

In the second magneto-optical recording medium of the invention, the first film comprises Pt and the second film comprises $CoM^2M^3$ wherein $M^2$ represents at least one element selected from among Pt and Pd and $M^3$ epresents at least one element selected from the group consisting of the undermentioned elements (a) to (h):

(a) 3d transition elements other than Co,

(b) 4d transition elements other than Pd,

(c) 5d transition elements other than Pt,

(d) Rare earth element,

(e) IIIB Group element,

(f) IVB Group element,

(g) VB Group element, and

(h) VIB Group elements.

The first film used in the second magneto-optical recording medium of the invention is the same as the first film used in the first magneto-optical recording medium of the invention.

As the $CoM^2M^3$ alloy forming the second film used in the second magneto-optical recording medium of the invention, there may be mentioned such an alloy as Co-Pt-$M^3$ alloy, Co-Pd-$M^3$ alloy or Co-Pt-Pd-$M^3$ alloy.

As the $M^3$ used in these alloys mentioned above, there may be used at least one element selected from the group consisting of the undermentioned elements (a) to (h).

(a) 3d transition elements other the Fe and Co. Specifically, Sc, Ti, V, Cr, Mn, Ni, Cu and Zn may be used. Among said elements, Ti, Ni, Cu, Zn and the like are preferably used.

(b) 4d transition elements other than Pd. Specifically, Y, Zr, Nb, Mo, Tc, Ru, Rh, Ag and Cd may be used. Among said elements, Zr and Nb are preferably used.

(c) 5d transition elements other than Pt and Au. Specifically, Hf, Ta, W, Re, Os, Ir and Hg may be used. Among said elements, Ta is preferably used.

(d) Rare earth elements. Specifically, Gd, Tb, Dy, Ho, Er, Yb, Lu, La, Ce, Pr, Nd, Pm, Sm and Eu may be used. Among said elements, Gd, Tb, Dy, Ho, Nd, Sm, and Pr are preferably used.

(e) IIIB Group elements. Specifically, B, Al, Ga, In, and Tl may be used. Among said elements, B, Al and Ga are preferably used.

(f) IVB Group elements. Specifically, C, Si, Ge, Sn, and Pb may be used. Among said elements, Si, Sn, Pb and Ge are preferably used.

(g) VB Group elements. Specifically, N, P, As, Sb and Bi may be used. Among said elements, Sb is preferably used.

(h) VIB Group elements. Specifically, S, Se, Te and Po may be used. Among said elements, Te is preferably used.

In the case where the second film used is the Co-Pt-$M^3$ alloy of the formula $Co_xPt_yM^3_{100-x-y}$, it is desirable that x (atom%) in said formula is 50-98 (atom%), preferably 70-95 (atom%), and y (atom%) is 45-1 (atom%), preferably 25-4 (atom%).

In the case where the second film used is the Co-Pd-$M^3$ alloy of the formula $Co_xPd_yM^3_{100-x-y}$, it is desirable that x (atom%) in said formula is 50-98 (atom%), preferably 70-95 (atom%), and y (atom%) is 45-1 (atom%), preferably 25-4 (atom%).

In the case where the second film used is the Co-Pt-Pd-$M^3$ alloy of the formula $Co_xPt_yPd_zM^3_{100-x-y-z}$, it is desirable that x (atom%) in said formula is 50-98 (atom%), preferably 70-95 (atom%), y (atom%) is 23-0.5 (atom%), preferably 13-2 (atom%), and z is 22-0.5 (atom%), preferably 12-2 (atom%).

As the alloys forming the second film of the second optical-recording medium of the present invention, there may be mentioned such as alloys as Co-Pt-Fe alloy, Co-Pd-Fe alloy, Co-Pt-Pd-Fe alloy, Co-Pt-Fe-Ti alloy, Co-Pd-Fe-Ti alloy, Co-Pt-Pd-Fe-Ti alloy, Co-Pt-Fe-Ni alloy, Co-Pd-Fe-Ni alloy, Co-Pt-Pd-Fe-Ni alloy, Co-Pt-Fe-Cu alloy, Co-Pd-Fe-Cu alloy, Co-Pt-Pd-Fe-Cu alloy, Co-Pt-Fe-Zn alloy, Co-Pd-Fe-Zn alloy, Co-Pt-Pd-Fe-Zn alloy, Co-Pt-Fe-Zr alloy, Co-Pd-Fe-Zr alloy, Co-Pt-Pd-Fe-Zr alloy, Co-Pt-Fe-Nb alloy, Co-Pd-Fe-Nb alloy, Co-Pt-Pd-Fe-Nb alloy, Co-Pt-Fe-Ta alloy, Co-Pd-Fe-Ta alloy, Co-Pt-Pd-Fe-Ta alloy, Co-Pt-Fe-Gd

6

alloy, Co-Pd-Fe-Gd alloy, Co-Pt-Pd-Fe-Gd alloy, Co-Pt-Fe-Tb alloy, Co-Pd-Fe-Tb alloy, Co-Pt-Pd-Fe-Tb alloy, Co-Pt-Fe-Dy alloy, Co-Pd-Fe-Dy alloy, Co-Pt-Pd-Fe-Dy alloy, Co-Pt-Fe-Ho alloy, Co-Pd-Fe-Ho alloy, Co-Pt-Pd-Fe-Ho alloy, Co-Pt-Fe-Nd alloy, Co-Pd-Fe-Nd alloy, Co-Pt-Pd-Fe-Nd alloy, Co-Pt-Fe-Sm alloy, Co-Pd-Fe-Sm alloy, Co-Pt-Pd-Fe-Sm alloy, Co-Pt-Fe-Pr alloy, Co-Pd-Fe-Pr alloy, Co-Pt-Pd-Fe-Pr alloy, Co-Pt-Tb alloy, Co-Pd-Tb alloy, Co-Pt-Pd-Tb alloy, Co-Pt-Tb-Ti alloy, Co-Pd-Tb-Ti alloy, Co-Pt-Pd-Tb-Ti alloy, Co-Pt-Tb-Ni alloy, Co-Pd-Tb-Ni alloy, Co-Pt-Pd-Tb-Ni alloy, Co-Pt-Tb-Cu alloy, Co-Pd-Tb-Cu alloy, Co-Pt-Pd-Tb-Cu alloy, Co-Pt-Tb-Zn alloy, Co-Pd-Tb-Zn alloy, Co-Pt-Pd-Tb-Zn alloy, Co-Pt-Tb-Zr alloy, Co-Pd-Tb-Zr alloy, Co-Pt-Pd-Tb-Zr alloy, Co-Pt-Tb-Nb alloy, Co-Pd-Tb-Nb alloy, Co-Pt-Pd-Tb-Nb alloy, Co-Pt-Tb-Ta alloy, Co-Pd-Tb-Ta alloy, Co-Pt-Pd-Tb-Ta alloy, Co-Pt-Tb-Gd alloy, Co-Pd-Tb-Gd alloy, Co-Pt-Pd-Tb-Gd alloy, Co-Pt-Tb-Dy alloy, Co-Pd-Tb-Dy alloy, Co-Pt-Pd-Tb-Dy alloy, Co-Pt-Tb-Ho alloy, Co-Pd-Tb-Ho alloy, Co-Pt-Pd-Tb-Ho alloy, Co-Pt-Tb-Nd alloy, Co-Pd-Tb-Nd alloy, Co-Pt-Pd-Tb-Nd alloy, Co-Pt-Tb-Sm alloy, Co-Pd-Tb-Sm alloy, Co-Pt-Pd-Tb-Sm alloy, Co-Pt-Tb-Pr alloy, Co-Pd-Tb-Pr alloy and Co-Pt-Pd-Tb-Pr alloy.

In the third magneto-optical recording medium of the invention, the first film comprises $PtM^4$ wherein $M^4$ represents at least one element selected from among Pd and Au and the second film comprises $CoM^5$ wherein $M^5$ represents at least one element selected from the group consisting of the undermentioned elements (a) to (h):

(a) 3d transition elements other than Co,

(b) 4d transition elements,

(c) 5d transition elements,

(d) Rare earth elements,

(e) IIIB Group elements,

(f) IVB Group elements,

(g) VB Group elements, and

(h) VIB Group elements.

As the $PtM^4$ alloy forming the first film of the third magneto-optical recording medium, there may be mentioned such as alloy as Pt-Pd alloy, Pt-Au alloy or Pt-Pd-Au alloy.

In the case where the first film used is the Pt-Pd alloy of the formula $Pt_xPd_{100-x}$, it is desirable that x (atom%) in said formula is 50-99.9 (atom%), preferably 70-98 (atom%).

Where the second film used is the Pt-Au alloy of the formula $Pt_xAu_{100-x}$, it is desirable that x (atom%) in said formula is 50-99.8 (atom%), preferably 70-98 (atom%).

Where the second film used is the Pt-Pd-Au alloy of the formula $Pt_xPd_yAu_{100-x-y}$, it is desirable that x (atom%) in said formula is 50-99.8 (atom%), preferably 70-98 (atom%), and y (atom%) is 0.1-45 (atom%), preferably 1-25 (atom%).

The first film may contain also small amounts of other metals in addition to Pt, Pd or Au. Such metals as may be used herein include concretely 3d transition elements such as Sc, Ti, V, Cr, Mn, Fe, Co, Ni, Cu and Zn; 4d transition elements such as Y, Zr, Nb, Mo, Tc, Ru, Rh, Ag and Cd; 5d transition elements such as Hf, Ta, W, Re, Os, Ir and Hg; rare earth elements such as Gd, Tb, Dy, Ho, Er, Yb, Lu, La, Ce, Pr, Nd, Pm, Sm and Eu; IIIB group elements such as B, Al, Ga, In and Tl, IVB Group elements such as C, Si, Ge, Sn and Pb; VB Group elements such as N, P, As, Sb and Bi; and VIB Group elements such as S, Se, Te and Po.

These metals as exemplified above may also be contained in the first film in the proportion of not more than 20 (atom%), preferably not more than 10 (atom%).

As the $M^5$ used in the $CoM^5$ alloy forming the second film of the third optical-recording medium of the present invention, there may be used at least one element selected from the group consisting of the undermentioned elements (a) to (h).

(a) 3d transition elements other than Co. Specifically, Sc, Ti, V, Cr, Mn, Fe, Ni, Cu and Zn may be used. Among said elements, Ti, Fe, Ni, Cu, Zn and the like are preferably used.

(b) 4d transition elements. Specifically, Y, Zr, Nb, Mo, Tc, Ru, Rh, Pd, Ag and Cd may be used. Among said elements, Zr and Nb are preferably used.

(c) 5d transition elements. Specifically, Hf, Ta, W, Re, Os, Ir, Pt, Au and Hg may be used. Among said elements, Ta is preferably used.

(d) Rare earth elements. Specifically, Gd, Tb, Dy, Ho, Er, Yb, Lu, La, Ce, Pr, Nd, Pm, Sm and Eu may be used. Among said elements, Gd, Tb, Dy, Ho, Nd, Sm, and Pr are preferably used.

(e) IIIB Group elements. Specifically, B, Al, Ga, In, and Tl may be used. Among said elements, B, Al and Ga are preferably used.

(f) IVB Group elements. Specifically, C, Si, Ge, Sn, and Pb may be used. Among said elements, Si, Sn, Pb and Ge are preferably used.

(g) VB Group elements. Specifically, N, P, As, Sb and Bi may be used. Among said elements, Sb is preferably used.

(h) VIB Group elements. Specifically, S, Se, Te and Po may be used. Among said elements, Te is preferably used.

In the case where the second film used is the alloy of the formula $Co_xM^5{}_{100-x}$, it is desirable that x (atom%) in said formula is 70-99.9 (atom%), preferably 80-98 (atom%).

As the alloys forming the second film of the third optical-recording medium of the present invention, there may be mentioned such as alloys as Co-Sc alloy, Co-Ti alloy, Co-V alloy, Co-Cr alloy, Co-Mn alloy, Co-Fe alloy, Co-Ni alloy, Co-Cu alloy, Co-Zn alloy, Co-Y alloy, Co-Zr alloy, Co-Nb alloy, Co-Mo alloy, Co-Tc alloy, Co-Ru alloy, Co-Rh alloy, Co-Pd alloy, Co-Ag alloy, Co-Cd alloy, Co-Hf alloy, Co-Ta alloy, Co-W alloy, Co-Re alloy, Co-Os alloy, Co-Ir alloy, Co-Pt alloy, Co-Au alloy, Co-Hg alloy, Co-Gd alloy, Co-Tb alloy, Co-Dy alloy, Co-Ho alloy, Co-Er alloy, Co-Yb alloy, Co-Lu alloy, Co-La alloy, Co-Ce alloy, Co-Pr alloy, Co-Nd alloy, Co-Pm alloy, Co-Sm alloy, Co-Eu alloy, Co-B alloy, Co-Al alloy, Co-Ga alloy, Co-In alloy, Co-Tl alloy, Co-C alloy, Co-Si alloy, Co-Ge alloy, Co-Sn alloy, Co-Pb alloy, Co-N alloy, Co-P alloy, Co-As alloy, Co-Sb alloy, Co-Bi alloy, Co-S alloy, Co-Se alloy, Co-Te alloy, Co-Po alloy, Co-Pt-Fe alloy, Co-Pd-Fe alloy, Co-Pt-Pd-Fe alloy, Co-Pt-Fe-Ti alloy, Co-Pd-Fe-Ti alloy, Co-Pt-Pd-Fe-Ti alloy, Co-Pt-Fe-Ni alloy, Co-Pd-Fe-Ni alloy, Co-Pt-Pd-Fe-Ni alloy, Co-Pt-Fe-Cu alloy, Co-Pd-Fe-Cu alloy, Co-Pt-Pd-Fe-Cu alloy, Co-Pt-Fe-Zn alloy, Co-Pd-Fe-Zn alloy, Co-Pt-Pd-Fe-Zn alloy, Co-Pt-Fe-Zr alloy, Co-Pd-Fe-Zr alloy, Co-Pt-Pd-Fe-Zr alloy, Co-Pt-Fe-Nb alloy, Co-Pd-Fe-Nb alloy, Co-Pt-Pd-Fe-Nb alloy, Co-Pt-Fe-Ta alloy, Co-Pd-Fe-Ta alloy, Co-Pt-Pd-Fe-Ta alloy, Co-Pt-Fe-Gd alloy, Co-Pd-Fe-Gd alloy, Co-Pt-Pd-Fe-Gd alloy, Co-Pt-Fe-Tb alloy, Co-Pd-Fe-Tb alloy, Co-Pt-Pd-Fe-Tb alloy, Co-Pt-Fe-Dy alloy, Co-Pd-Fe-Dy alloy, Co-Pt-Pd-Fe-Dy alloy, Co-Pt-Fe-Ho alloy, Co-Pd-Fe-Ho alloy, Co-Pt-Pd-Fe-Ho alloy, Co-Pt-Fe-Nd alloy, Co-Pd-Fe-Nd alloy, Co-Pt-Pd-Fe-Nd alloy, Co-Pt-Fe-Sm alloy, Co-Pd-Fe-Sm alloy, Co-Pt-Pd-Fe-Sm alloy, Co-Pt-Fe-Pr alloy, Co-Pd-Fe-Pr alloy, Co-Pt-Pd-Fe-Pr alloy, Co-Pt-Tb alloy, Co-Pd-Tb alloy, Co-Pt-Pd-Tb alloy, Co-Pt-Tb-Ti alloy, Co-Pd-Tb-Ti alloy, Co-Pt-Pd-Tb-Ti alloy, Co-Pt-Tb-Ni alloy, Co-Pd-Tb-Ni alloy, Co-Pt-Pd-Tb-Ni alloy, Co-Pt-Tb-Cu alloy, Co-Pd-Tb-Cu alloy, Co-Pt-Pd-Tb-Cu alloy, Co-Pt-Tb-Zn alloy, Co-Pd-Tb-Zn alloy, Co-Pt-Pd-Tb-Zn alloy, Co-Pt-Tb-Zr alloy, Co-Pd-Tb-Zr alloy, Co-Pt-Pd-Tb-Zr alloy, Co-Pt-Tb-Nb alloy, Co-Pd-Tb-Nb alloy, Co-Pt-Pd-Tb-Nb alloy, Co-Pt-Tb-Ta alloy, Co-Pd-Tb-Ta alloy, Co-Pt-Pd-Tb-Ta alloy, Co-Pt-Tb-Gd alloy, Co-Pd-Tb-Gd alloy, Co-Pt-Pd-Tb-Gd alloy, Co-Pt-Tb-Dy alloy, Co-Pd-Tb-Dy alloy, Co-Pt-Pd-Tb-Dy alloy, Co-Pt-Tb-Ho alloy, Co-Pd-Tb-Ho alloy, Co-Pt-Pd-Tb-Ho alloy, Co-Pt-Tb-Nd alloy, Co-Pd-Tb-Nd alloy, Co-Pt-Pd-Tb-Nd alloy, Co-Pt-Tb-Sm alloy, Co-Pd-Tb-Sm alloy, Co-Pt-Pd-Tb-Sm alloy, Co-Pt-Tb-Pr alloy, Co-Pd-Tb-Pr alloy and Co-Pt-Pd-Tb-Pr alloy.

In the fourth magneto-optical recording medium of the invention, the first film comprises Pd and the second film comprises $CoM^6$ alloy wherein $M^6$ represents at least one element selected from among Gd, Dy, Tb, Nd, Cr, Zr, Hf, Ta and Al.

The first film used in the fourth magneto-optical recording medium may contain also amounts of other metals in addition to Pd. Such other metals as may be used herein include concretely 3d transition elements such as Sc, Ti, V, Cr, Mn, Fe, Co, Ni, Cu and Zn; 4d transition elements such as Y, Zr, Nb, Mo, Tc, Ru, Rh, Ag and Cd; 5d transition elements such as Hf, Ta, W, Re, Os, Ir, Pt, Au and Hg; rare earth elements such as Gd, Tb, Dy, Ho, Er, Yb, Lu, La, Ce, Pr, Nd, Pm, Sm and Eu; IIIB Group elements such as B, Al, Ga, In and Tl; IVB Group elements such as C, Si, Ge, Sn and Pb; VB Group elements such as N, P, As, Sb and Bi; and VIB Group elements such as S, Se, Te and Po.

These metals as exemplified above may be contained in the first film in the proportion of not more than 20 (atom%), preferably not more than 10 (atom%).

As $M^6$ used in the $CoM^6$ alloy forming the second film of the fourth magneto-optical recording medium, there may be mentioned at least one element selected from among Gd, Dy, Tb, Nd, Cr, Zr, Hf, Ta and Al. Among said elements, Gd, Dy, Tb, Cr, Zr and Hf are preferably used.

In the case where the second film used is the alloy of the formula $Co_xM^6{}_{100-x}$, it is desirable that x (atom%) in said formula is 70-99.9 (atom%), preferably 80-98 (atom%).

As the alloys forming the second film of the fourth optical-recording medium of the present invention, there may be mentioned such as alloys as Co-Gd alloy, Co-Dy alloy, Co-Tb alloy, Co-Nd alloy, Co-Cr alloy, Co-Zr alloy, Co-Hf alloy, Co-Ta alloy, Co-Al alloy, Co-Gd-Dy alloy, Co-Gd-Tb alloy, Co-Gd-Nd alloy, Co-Gd-Cr alloy, Co-Gd-Zr alloy, Co-Gd-Hf alloy, Co-Gd-Ta alloy, Co-Gd-Al alloy, Co-Gd-Dy-Tb alloy, Co-Gd-Dy-Nd alloy, Co-Gd-Dy-Cr alloy, Co-Gd-Dy-Zr alloy, Co-Gd-Dy-Hf alloy, Co-Gd-Dy-Ta alloy, Co-Gd-Dy-Al alloy, Co-Gd-Dy-Tb-Nd alloy, Co-Gd-Dy-Tb-Cr alloy, Co-Gd-Dy-Tb-Zr alloy, Co-Gd-Dy-Tb-Hf alloy, Co-Gd-Dy-Tb-Ta alloy and Co-Gd-Dy-Tb-Al alloy.

In the fifth magneto-optical recording medium of the invention, the first film comprises $CoPtM^7$ alloy, and the second film comprises $CoPtM^8$ alloy wherein $M^7$ and $M^8$ represent at least one element selected from the group consisting of the undermentioned elements (a) to (h), and $M^7$ and $M^8$ differ from each other.

EP 0 449 252 A1

(a) 3d transition elements other than Co. Specifically, Sc, Ti, V, Cr, Mn, Fe, Ni, Cu and Zn may be used. Among said elements, Ti, Fe, Ni, Cu, Zn and the like are preferably used.

(b) 4d transition elements. Specifically, Y, Zr, Nb, Mo, Tc, Ru, Rh, Pd, Ag and Cd may be used. Among said elements, Zr and Nb are preferably used.

(c) 5d transition elements. Specifically, Hf, Ta, W, Re, Os, Ir, Pt, Au and Hg may be used. Among said elements, Ta is preferably used.

(d) Rare earth elements. Specifically, Gd, Tb, Dy, Ho, Er, Yb, Lu, La, Ce, Pr, Nd, Pm, Sm and Eu may be used. Among said elements, Gd, Tb, Dy, Ho, Nd, Sm, and Pr are preferably used.

(e) IIIB Group elements. Specifically, B, Al, Ga, In, and Tl may be used. Among said elements, B, Al and Ga are preferably used.

(f) IVB Group elements. Specifically, C, Si, Ge, Sn, and Pb may be used. Among said elements, Si, Sn, Pb and Ge are preferably used.

(g) VB Group elements. Specifically, N, P, As, Sb and Bi may be used. Among said elements, Sb is preferably used.

(h) VIB Group elements. Specifically, S, Se, Te and Po may be used. Among said elements, Te is preferably used.

In the case where the first film forming the fifth mogneto-optical recording medium of the present invention is the Co-Pt-$M^7$ alloy of the formula $Co_xPt_yM^7_{100-x-y}$, it is desirable that x (atom%) in said formula is 50-99.8 (atom%), preferably 70-98 (atom%), and y (atom%) is 0.1-45 (atom%), preferably 1-25 (atom%).

In the case where the second film forming the fifth mogneto-optical recording medium of the present invention is the Co-Pt-$M^7$ alloy of the formula $Co_xPt_yM^7_{100-x-y}$, it is desirable that x (atom%) in said formula is 50-99.8 (atom%), preferably 70-98 (atom%), and y (atom%) is 0.1-45 (atom%), preferably 1-25 (atom%).

As the alloys forming the first and second film of the fifth optical-recording medium of the present inventicn, there may be mentioned such as alloys as Co-Pt-Sc alloy, Co-Pt-Ti alloy, Co-Pt-V alloy, Co-Pt-Cr alloy, Co-Pt-Mn alloy, Co-Pt-Fe alloy, Co-Pt-Ni alloy, Co-Pt-Cu alloy, Co-Pt-Zn alloy, Co-Pt-Y alloy, Co-Pt-Zr alloy, Co-Pt-Nb alloy, Co-Pt-Mo alloy, Co-Pt-Tc alloy, Co-Pt-Ru alloy, Co-Pt-Rh alloy, Co-Pt-Pd alloy, Co-Pt-Ag alloy, Co-Pt-Cd alloy, Co-Pt-Hf alloy, Co-Pt-Ta alloy, Co-Pt-W alloy, Co-Pt-Re alloy, Co-Pt-Os alloy, Co-Pt-Ir alloy, Co-Pt-Au alloy, Co-Pt-Hg alloy, Co-Pt-Gd alloy, Co-Pt-Tb alloy, Co-Pt-Dy alloy, Co-Pt-Ho alloy, Co-Pt-Er alloy, Co-Pt-Yb alloy, Co-Pt-Lu alloy, Co-Pt-La alloy, Co-Pt-Ce alloy, Co-Pt-Pr alloy, Co-Pt-Nd alloy, Co-Pt-Pm alloy, Co-Pt-Sm alloy, Co-Pt-Eu alloy, Co-Pt-B alloy, Co-Pt-Al alloy, Co-Pt-Ga alloy, Co-Pt-In alloy, Co-Pt-Tl alloy, Co-Pt-C alloy, Co-Pt-Si alloy, Co-Pt-Ge alloy, Co-Pt-Sn alloy, Co-Pt-Pb alloy, Co-Pt-N alloy, Co-Pt-P alloy, Co-Pt-As alloy, Co-Pt-Sb alloy, Co-Pt-Bi alloy, Co-Pt-S alloy, Co-Pt-Se alloy, Co-Pt-Te alloy and Co-Pt-Po alloy.

The first and second films forming the magneto-optical recording layer of the fifth magneto-optical recording medium of the present invention comprise aforementioned alloys, and the composition of the films differ from each other. As such magneto-optical recording layer, preferred combination of the first and second films are

magneto-optical recording layer formed from Co-Pt-Ti alloy as the first film and Co-Pt-Tb alloy as the second film;

magneto-optical recording layer formed from Co-Pt-Cr alloy as the first film and Co-Pt-Tb alloy as the second film;

magneto-optical recording layer formed from Co-Pt-Zr alloy as the first film and Co-Pt-Tb alloy as the second film;

magneto-optical recording layer formed from Co-Pt-Hf alloy as the first film and Co-Pt-Tb alloy as the second film;

magneto-optical recording layer formed from Co-Pt-Gd alloy as the first film and Co-Pt-Cr alloy as the second film;

magneto-optical recording layer formed from Co-Pt-Gd alloy as the first film and Co-Pt-Ti alloy as the second film;

magneto-optical recording layer formed from Co-Pt-Dy alloy as the first film and Co-Pt-Ti alloy as the second film; and

magneto-optical recording layer formed from Co-Pt-Nd alloy as the first film and Co-Pt-Ti alloy as the second film.

In the sixth magneto-optical recording medium of the invention, the first film comprises Pt$M^9$ wherein $M^9$ is selected from the group consisting consisting of the undermentioned elements (a) to (h), and the second film consists essentially of Co.

(a) 3d transition elements. Specifically, Sc, Ti, V, Cr, Mn, Fe, Co, Ni, Cu and Zn may be used. Among said elements, Ti, Fe, Ni, Cu, Zn and the like are preferably used.

9

(b) 4d transition elements. Specifically, Y, Zr, Nb, Mo, Tc, Ru, Rh, Pd, Ag and Cd may be used. Among said elements, Zr and Nb are preferably used.

(c) 5d transition elements. Specifically, Hf, Ta, W, Re, Os, Ir, Pt, Au and Hg may be used. Among said elements, Ta is preferably used.

(d) Rare earth elements. Specifically, Gd, Tb, Dy, Ho, Er, Yb, Lu, La, Ce, Pr, Nd, Pm, Sm and Eu may be used. Among said elements, Gd, Tb, Dy, Ho, Nd, Sm, and Pr are preferably used.

(e) IIIB Group elements. Specifically, B, Al, Ga, In, and Tl may be used. Among said elements, B, Al and Ga are preferably used.

(f) IVB Group elements. Specifically, C, Si, Ge, Sn, and Pb may be used. Among said elements, Si, Sn, Pb and Ge are preferably used.

(g) VB Group elements. Specifically, N, P, As, Sb and Bi may be used. Among said elements, Sb is preferably used.

(h) VIB Group elements. Specifically, S, Se, Te and Po may be used. Among said elements, Te is preferably used.

In the case where the first film forming the sixth mogneto-optical recording medium of the present invention is the $Pt-M^9$ alloy of the formula $Pt_xM^9_{100-x}$, it is desirable that x (atom%) in said formula is 70-99.9 atom%, preferably 80-98 atom%.

As the alloys forming the first film of the sixth optical-recording medium of the present invention, there may be mentioned such as alloys as Pt-Sc alloy, Pt-Ti alloy, Pt-V alloy, Pt-Cr alloy, Pt-Mn alloy, Pt-Fe alloy, Pt-Co alloy, Pt-Ni alloy, Pt-Cu alloy, Pt-Zn alloy, Pt-Y alloy, Pt-Zr alloy, Pt-Nb alloy, Pt-Mo alloy, Pt-Tc alloy, Pt-Ru alloy, Pt-Rh alloy, Pt-Pd alloy, Pt-Ag alloy, Pt-Cd alloy, Pt-Hf alloy, Pt-Ta alloy, Pt-W alloy, Pt-Re alloy, Pt-Os alloy, Pt-Ir alloy, Pt-Au alloy, Pt-Hg alloy, Pt-Gd alloy, Pt-Tb alloy, Pt-Dy alloy, Pt-Ho alloy, Pt-Er alloy, Pt-Yb alloy, Pt-Lu alloy, Pt-La alloy, Pt-Ce alloy, Pt-Pr alloy, Pt-Nd alloy, Pt-Pm alloy, Pt-Sm alloy, Pt-Eu alloy, Pt-B alloy, Pt-Al alloy, Pt-Ga alloy, Pt-In alloy, Pt-Tl alloy, Pt-C alloy, Pt-Si alloy, Pt-Ge alloy, Pt-Sn alloy, Pt-Pb alloy, Pt-N alloy, Pt-P alloy, Pt-As alloy, Pt-Sb alloy, Pt-Bi alloy, Pt-S alloy, Pt-Se alloy, Pt-Te alloy and Pt-Po alloy.

The seventh magneto-optical recording media of the present invention are described in detail.

In the seventh magneto-optical recording medium of the invention, the first and second film comprise at least one element selected from the group consisting of Fe and Co, at least one element selected from the group consisting of Pt, Pd and Au, and, at least element selected from the group consisting of below-mentioned (a) to (h), further the composition thereof differ from each other.

(a) 3d transition elements other the Fe and Co. Specifically, Sc, Ti, V, Cr, Mn, Ni, Cu and Zn may be used. Among said elements, Ti, Ni, Cu, Zn and the like are preferably used.

(b) 4d transition elements other than Pd. Specifically, Y, Zr, Nb, Mo, Tc, Ru, Rh, Ag and Cd may be used. Among said elements, Zr and Nb are preferably used.

(c) 5d transition elements other than Pt and Au. Specifically, Hf, Ta, W, Re, Os, Ir, Au, and Hg may be used. Among said elements, Ta is preferably used.

(d) Rare earth elements. Specifically, Gd, Tb, Dy, Ho, Er, Yb, Lu, La, Ce, Pr, Nd, Pm, Sm, and Eu may be used. Among said elements, Gd, Tb, Dy, Ho, Nd, Sm, and Pr are preferably used.

(e) IIIB Group elements. Specifically, B, Al, Ga, In, and Tl may be used. Among said elements, B, Al and Ga are preferably used.

(f) IVB Group elements. Specifically, C, Si, Ge, Sn, and Pb may be used. Among said elements, Si, Sn, Pb and Ge are preferably used.

(g) VB Group elements. Specifically, N, P, As, Sb and Bi may be used. Among said elements, Sb is preferably used.

(h) VIB Group elements. Specifically, S, Se, Te and Po may be used. Among said elements, Te is preferably used.

The first and second films forming a magneto-optical recording layer of the seventh magneto-optical recording media of the present invention are described in detail.

The first film is constructed with Fe or Co or both of them, preferably with Co incorporated as its component or components. In the first film, Fe or Co or both of them exists or exist by 50 to 99.8 atom%, preferably 60 to 99.8 atom%. Further, the first film is constructed with at least one element selected from group consisting of Pt, Pd and Au, preferably with Pt. In the first film, at least one element selected from group consisting of Pt, Pd and Au exist or exists by 0.1 to 50 atom%, preferably 0.5 to 40 atom%. Furthermore, the first film is constructed with at least one element selected from aforementioned group (a) to (h), preferably with (d) rare earth elements. In the first film, at least one element selected from aforementioned group (a) to (h) exist or exists by 0.1 to 40 atom%, preferably 0.5 to 30 atom%.

The second film is constructed with Fe or Co or both of them, preferably with Co incorporated as its component or components. In the second film, Fe or Co or both of them exists or exist by 0.1 to 50 atom%, preferably 0.5 to 40 atom%. Further, the second film is constructed with at least one element selected from group consisting of Pt, Pd and Au, preferably with Pt. In the second film, at least one element selected from group consisting of Pt, Pd and Au exist or exists by 50 to 99.8 atom%, preferably 60 to 99.0 atom%. Furthermore, the second film is constructed with at least one element selected from aforementioned group (a) to (h), preferably with (d) rare earth elements. In the second film, at least one element selected from aforementioned group (a) to (h) exist or exists by 0.1 to 40 atom%, preferably 0.5 to 30 atom%.

As the alloys forming the first and second film of the seventh optical-recording medium of the present invention, there may be mentioned such as alloys as Fe-Pt-Ti alloy, Fe-Pt-Ni alloy, Fe-Pt-Cu alloy, Fe-Pt-Zn alloy, Fe-Pt-Nb alloy, Fe-Pt-Ta alloy, Fe-Pt-B alloy, Fe-Pt-In alloy, Fe-Pt-Si alloy, Fe-Pt-Sn alloy, Fe-Pt-Pb alloy, Fe-Pt-Sb alloy, Fe-Pt-Sm alloy, Fe-Pt-Nd alloy, Fe-Pt-Tb alloy, Fe-Pt-Te alloy, Fe-Pt-Ti-Tb alloy, Fe-Pt-Ni-Tb alloy, Fe-Pt-Cu-Tb alloy, Fe-Pt-Zn-Tb alloy, Fe-Pt-Nb-Tb alloy, Fe-Pt-Ta-Tb alloy, Fe-Pt-B-Tb alloy, Fe-Pt-In-Tb alloy, Fe-Pt-Si-Tb alloy, Fe-Pt-Sn-Tb alloy, Fe-Pt-Pb-Tb alloy, Fe-Pt-Sb-Tb alloy, Fe-Pt-Sm-Tb alloy, Fe-Pt-Nd-Tb alloy, Fe-Pt-Tb-Te alloy, Fe-Pt-Te-Tb alloy, Co-Pt-Ti alloy, Co-Pt-Ni alloy, Co-Pt-Cu alloy, Co-Pt-Zn alloy, Co-Pt-Nb alloy, Co-Pt-Ta alloy, Co-Pt-B alloy, Co-Pt-In alloy, Co-Pt-Si alloy, Co-Pt-Sn alloy, Co-Pt-Pb alloy, Co-Pt-Sb alloy, Co-Pt-Sm alloy, Co-Pt-Nd alloy, Co-Pt-Tb alloy, Co-Pt-Te alloy, Co-Pt-Ti-Tb alloy, Co-Pt-Ni-Tb alloy, Co-Pt-Cu-Tb alloy, Co-Pt-Zn-Tb alloy, Co-Pt-Nb-Tb alloy, Co-Pt-Ta-Tb alloy, Co-Pt-B-Tb alloy, Co-Pt-In-Tb alloy, Co-Pt-Si-Tb alloy, Co-Pt-Sn-Tb alloy, Co-Pt-Pb-Tb alloy, Co-Pt-Sb-Tb alloy, Co-Pt-Sm-Tb alloy, Co-Pt-Nd-Tb alloy, Co-Pt-Tb-Te alloy, Co-Pt-Te-Tb alloy, Fe-Co-Pt-Ti alloy, Fe-Co-Pt-Ni alloy, Fe-Co-Pt-Cu alloy, Fe-Co-Pt-Zn alloy, Fe-Co-Pt-Nb alloy, Fe-Co-Pt-Ta alloy, Fe-Co-Pt-B alloy, Fe-Co-Pt-In alloy, Fe-Co-Pt-Si alloy, Fe-Co-Pt-Sn alloy, Fe-Co-Pt-Pb alloy, Fe-Co-Pt-Sb alloy, Fe-Co-Pt-Sm alloy, Fe-Co-Pt-Nd alloy, Fe-Co-Pt-Tb alloy, Fe-Co-Pt-Te alloy, Fe-Co-Pt-Ti-Tb alloy, Fe-Co-Pt-Ni-Tb alloy, Fe-Co-Pt-Cu-Tb alloy, Fe-Co-Pt-Zn-Tb alloy, Fe-Co-Pt-Nb-Tb alloy, Fe-Co-Pt-Ta-Tb alloy, Fe-Co-Pt-B-Tb alloy, Fe-Co-Pt-In-Tb alloy, Fe-Co-Pt-Si-Tb alloy, Fe-Co-Pt-Sn-Tb alloy, Fe-Co-Pt-Pb-Tb alloy, Fe-Co-Pt-Sb-Tb alloy, Fe-Co-Pt-Sm-Tb alloy, Fe-Co-Pt-Nd-Tb alloy, Fe-Co-Pt-Tb-Te alloy, Fe-Co-Pt-Te-Tb alloy, Fe-Pd-Ti alloy, Fe-Pd-Ni alloy, Fe-Pd-Cu alloy, Fe-Pd-Zn alloy, Fe-Pd-Nb alloy, Fe-Pd-Ta alloy, Fe-Pd-B alloy, Fe-Pd-In alloy, Fe-Pd-Si alloy, Fe-Pd-Sn alloy, Fe-Pd-Pb alloy, Fe-Pd-Sb alloy, Fe-Pd-Sm alloy, Fe-Pd-Nd alloy, Fe-Pd-Tb alloy, Fe-Pd-Te alloy, Fe-Pd-Ti-Tb alloy, Fe-Pd-Ni-Tb alloy, Fe-Pd-Cu-Tb alloy, Fe-Pd-Zn-Tb alloy, Fe-Pd-Nb-Tb alloy, Fe-Pd-Ta-Tb alloy, Fe-Pd-B-Tb alloy, Fe-Pd-In-Tb alloy, Fe-Pd-Si-Tb alloy, Fe-Pd-Sn-Tb alloy, Fe-Pd-Pb-Tb alloy, Fe-Pd-Sb-Tb alloy, Fe-Pd-Sm-Tb alloy, Fe-Pd-Nd-Tb alloy, Fe-Pd-Tb-Te alloy, Fe-Pd-Te-Tb alloy, Co-Pd-Ti alloy, Co-Pd-Ni alloy, Co-Pd-Cu alloy, Co-Pd-Zn alloy, Co-Pd-Nb alloy, Co-Pd-Ta alloy, Co-Pd-B alloy, Co-Pd-In alloy, Co-Pd-Si alloy, Co-Pd-Sn alloy, Co-Pd-Pb alloy, Co-Pd-Sb alloy, Co-Pd-Sm alloy, Co-Pd-Nd alloy, Co-Pd-Tb alloy, Co-Pd-Te alloy, Co-Pd-Ti-Tb alloy, Co-Pd-Ni-Tb alloy, Co-Pd-Cu-Tb alloy, Co-Pd-Zn-Tb alloy, Co-Pd-Nb-Tb alloy, Co-Pd-Ta-Tb alloy, Co-Pd-B-Tb alloy, Co-Pd-In-Tb alloy, Co-Pd-Si-Tb alloy, Co-Pd-Sn-Tb alloy, Co-Pd-Pb-Tb alloy, Co-Pd-Sb-Tb alloy, Co-Pd-Sm-Tb alloy, Co-Pd-Nd-Tb alloy, Co-Pd-Tb-Te alloy, Co-Pd-Te-Tb alloy, Fe-Co-Pd-Ti alloy, Fe-Co-Pd-Ni alloy, Fe-Co-Pd-Cu alloy, Fe-Co-Pd-Zn alloy, Fe-Co-Pd-Nb alloy, Fe-Co-Pd-Ta alloy, Fe-Co-Pd-B alloy, Fe-Co-Pd-In alloy, Fe-Co-Pd-Si alloy, Fe-Co-Pd-Sn alloy, Fe-Co-Pd-Pb alloy, Fe-Co-Pd-Sb alloy, Fe-Co-Pd-Sm alloy, Fe-Co-Pd-Nd alloy, Fe-Co-Pd-Tb alloy, Fe-Co-Pd-Te alloy, Fe-Co-Pd-Ti-Tb alloy, Fe-Co-Pd-Ni-Tb alloy, Fe-Co-Pd-Cu-Tb alloy, Fe-Co-Pd-Zn-Tb alloy, Fe-Co-Pd-Nb-Tb alloy, Fe-Co-Pd-Ta-Tb alloy, Fe-Co-Pd-B-Tb alloy, Fe-Co-Pd-In-Tb alloy, Fe-Co-Pd-Si-Tb alloy, Fe-Co-Pd-Sn-Tb alloy, Fe-Co-Pd-Pb-Tb alloy, Fe-Co-Pd-Sb-Tb alloy, Fe-Co-Pd-Sm-Tb alloy, Fe-Co-Pd-Nd-Tb alloy, Fe-Co-Pd-Tb-Te alloy and Fe-Co-Pd-Te-Tb alloy.

In the case where the first film forming the seventh mogneto-optical recording medium of the present invention is the alloy of the formula $A_xB_yC_{100-x-y}$ wherein the A represents at least one element selected from group consisting of Fe and Co, the B represents at least one element selected from group consisting of Pt, Pd and Au, and the C represents at least one element selected from aforementioned group (a) to (h), it is desirable that x (atom%) in said formula is 50 to 99.8 atom%, preferably 60 to 99.0 atom%, and y (atom%) is 0.1 to 50 atom%, preferably 0.5 to 40 atom%.

In the case where the second film forming the seventh mogneto-optical recording medium of the present invention is the alloy of the formula $A_xB_yC_{100-x-y}$ wherein the A represents at least one element selected from group consisting of Fe and Co, the B represents at least one element selected from group consisting of Pt, Pd and Au, and the C represents at least one element selected from aforementioned group (a) to (h), it is desirable that x (atom%) in said formula is 0.1 to 50 atom%, preferably 0.5 to 40 atom%, and y (atom%) is 50 to 99.8 atom%, preferably 60 to 99.0 atom%.

The magneto-optical recording layers of the first to seventh magneto-optical recording media of the present invention are laminated bodies of films constructed of the first film and the second film, each of which having said respective compositions, which are laminated alternately.

It is desirable that the thickness of the first film in the aforementioned magneto-optical recording layers be 5-25 Å per layer, and preferably 10-20 Å. It is desirable that the thickness of the second film be 3-15 Å per layer, and preferably 3-10 Å per layer. Furthermore, it is desirable that the magneto-optical recording layer constructed of alternately laminated pluralities of the first film and the second film having said unit thickness has the total thickness of 50-1200 Å, preferably 50-1000 Å, more preferably 100-700 Å and still more preferably 100-500 Å.

It has been verified that the magneto-optical recording layer having a periodical structure, wherein the first film and the second film, each of which having said compositions and thicknesses, are alternately laminated, has an easy direction of magnetization perpendicularly to the film surface and permits perpendicular magnetic recording, imparting squareness loop excellent in Kerr hysteresis.

By the statement in the present Specification that "imparting squareness loop excellent in Kerr hysteresis", it is meant that the ratio ($\theta k_2/\theta k_1$), which is the ratio of Kerr rotation angle of saturation magnetization in the maximum external magnetic field ($\theta k_1$) to Kerr rotation angle of residual magnetization in the absence (zero level) of external magnetic field ($\theta k_2$), is 0.8 or more.

In the present invention, the system containing 15 atom% or more of Pt, Pd and/or Au is characterized in that its reflectance (R) value is higher than in the system not containing Pt, Pd and/or Au. Generally, in this case, because of the relationship of

$$C/N \propto \sqrt{R} \cdot \theta k$$

where

R = Reflectance

$\theta k$ = Kerr rotation angle,

it suffices if simply either one of R or $\theta k$ or both of them be increased to improve the C/N ratio.

Consequently, the advantage of the magneto-optical recording layer of the present invention having a high R value is that the C/N ratio in the process of magneto-optical recording is improved.

In the present invention, various other elements may be added to the first film or the second film additionally to improve Curie point, compensation temperature (compensation point), Hc or $\theta k$ or to reduce costs of production. These elements may be used in amounts,

Although it is ideal that the interface between two adjoining films constituting the magneto-optical recording layers of the present invention is formed flat and smooth with different metal atoms arranged neatly into a superlattice structure, whose composition as a whole changes at regular intervals, it may aloso be possible that so-called compositionally modulated multilayered structure in whose composition changes slightly irregular at interface, however the whole composition modulates with keeping constant period.

Next, the process for producing magneto-optical recording layers of the magneto-optical recording media of the present invention is explained as follows.

The magneto-optical recording layers of the magneto-optical recording media of the present invention may be produced by the process which comprises maintaining temperature of the substrate at about room temperature, successively depositing a film having the predetermined composition on the rotating substrate (it may be fixed so long as a shutter on each target is opened and closed alternately) by the known film depositing method such as sputtering, electron beam evaporation method or vacuum simultaneous evaporation method using a composite target with chips of the elements constituting the first film and the second film of the magneto-optical recording layers of the magneto-optical recording media of the present invention arranged in the predetermined proportion or an alloy target having the predetermined composition.

The magneto-optical recording media of the present invention can be formed at ordinary temperatures, and hence there is no need for heat treatment such as annealing in order to impart to the media the easy direction of magnetization perpendicularly to the film surface.

If necessary, it is also possible to form the amorphous alloy film on the substrate while heating said substrate to 50-600 °C or cooling it down to -50 °C.

At the time of sputtering, a negative bias voltage can be applied to the substrate so that said substrate has negative potential. When the substrate is treated in the aforementioned manner, accelerated ions of inert gas such as argon impinge on not only the target substance, but also the magneto-optical recording layer which is in the course of being applied thereonto, and hence there may be sometimes obtained a magneto-optical recording media having excellent properties. Further, in the present invention, the magneto-optical recording multilayer may be formed by primarily laminating the first film on the substrate as the film nearest to the substrate and thereby alternately laminating the second film and the first film on said nearest first film, or primarily laminating the second film on the substrate as the film nearest to the substrate and thereby alternately laminating the first film and the second film on said nearest second film.

As explained in the foregoing, the magneto-optical recording layer of the magneto-optical recording medium of the present invention is constructed of a laminated body wherein the first film and second film are laminated alternately, which has excellent oxidation resistance, has an easy direction of magnetization perpendicularly to the film surface, and imparts excellent polar magneto-optical Kerr rotation angle even in response to reproduction light of a short wavelength. Consequently, it becomes possible to provide magneto-optical recording media with such characteristics that the squareness ratio of Kerr hysteresis loop is increased to a level higher than the conventional one, oxidation resistance is improved, and excellent polar magneto-optical Kerr rotation angle is attained even in response to reproduction light of a short wavelength.

It is thus rendered possible for the aforementioned magneto-optical recording media to have either one of the following constructions:

(A) Substrate/magneto-optical recording layer,

(B) Substrate/enhancement film (protective film)/magneto-optical recording layer,

(C) Substrate/magneto-optical recording film/metallic layer,

(D) Substrate/enhancement film (protective film)/magneto-optical recording layer/metallic layer,

(E) Substrate/enhancement film (protective film)/magneto-optical recording layer/enhancement film (protective film)/metallic layer, or

it is rendered possible for the aforementioned magneto-optical recording media to be constructed with a protective coating or a protective label provided as the outermost layer thereupon merely for imparting thereto abrasion resistance.

For the aforementioned enhancement film (protective film), either organic or inorganic material may be employed provided that its refractive index is higher than that of the substrate. There can be cited as specific examples of this enhancement film such oxides as $TiO_2$, $SiO$, $TiO$, $ZnO$, $ZrO_2$, $Ta_2O_5$, $Nb_2O_5$, $CeO_2$, $SnO_2$ and $TeO_2$, and such nitrides as $Si_3N_4$, $SiNx$ $(0<x\leq4/3)$ AlN and BN, such sulfides as ZnS and CdS, and such substances as ZnSe, SiC and Si. Furthermore, such transparent materials having Faraday effect as ferrites represented by cobalt ferrite and garnets represented by Bi-displaced garnet may be used as the enhancement film.

Besides such inorganic materials as glass, aluminum, or the like, such organic materials may be used for the substrate as acrylic resin, polycarbonate, polycarbonate-polystyrene polymer alloy, ethylene-cycloolefine copolymer disclosed in the specification of U. S. Patent No.4614778 such as 1,4,5,8-dimethano-1,2,3,4,4a,5,8,8a-octahydronaphthalene(tetracyclododecene)-ethylene copolymer, 2-methyl-1,4,5,8-dimethano-1,2,3,4,4a,5,8,8a-octahydronaphthalene(methyl-tetracyclododecene)-ethylene copolymer, and 2-ethyl-1,4,5,8-dimethano-1,2,3,4,4a,5,8,8a-octahydro-naphthalene-ethylene copolymer, poly-4-methyl-1-pentene, epoxy resin, polyethersulfon, polysulfon, polyetherimide, ring-open homopolymer of the tetracyclododecenes, ring-open copolymer of the tetracyclododecenes and norbornene, and hydrogenated thereof disclosed in Japanese Patent L-O-P 26024/1985. The thickness of the substrate is not particularly limited, but it is preferably 0.5-5 mm, and particularly preferably 1-2 mm.

The construction of the magneto-optical disc is not limited to the construction cited as (A) to (E), but may be laminated bodies of the base layers or high magnetic permeability soft magnetic films, or combined single-layer discs may be used, besides single-layer discs.

As a matter of course, any writing-in method to input signals into the magneto-optical recording layer of the magneto-optical recording medium may be adequately employed so long as it is capable of supplying energy required to reverse magnetic field such as light beam, needle-type magnetic head, hot pen, and electron beam.

Since the magneto-optical recording layers constituting the magneto-optical recording media of the present invention have the easy direction of magnetization perpendicularly to the film surface, the aforesaid magneto-optical recording layers can be utilized not only as the magneto-optical recording media alone, but in various other applications such as the magneto-optical recording material including perpendicular magneto-optical recording film and magnetic bubble memory, and for the light modulation devise utlizing the magneto-optical effect thereof.

For example, in the perpendicular magneto-optical recording area, expectation is entertained of the aforesaid magneto-optical recording layer for useful application as recording films for the flexible perpendicular recording disc as well as for the rigid magneto-optical recording disc. Still more expectation is entertained for successful application to the light modulation device which depends on the principle of varying polar magneto-optical Kerr rotation angle and Faraday rotation angle by controlling the external magnetic field and actuating photoelectric cell by varying the light intensity of reflected light or transmitted light.

## EFFECT OF THE INVENTION

Since magneto-optical recording layers in the magneto-optical recording media of the present invention are laminated bodies having periodical structures wherein the first film and second film having specific composition are alternately laminated, there can be obtained magneto-optical recording media having such magneto-optical recording multilayers that as a whole are excellent in magnetic characteristics such as coercive force Hc, residual magnetization and saturation magnetization, and, furthermore, impart wide polar magneto-optical Kerr rotation angle even in response to reproduction light of a short wavelength. And the magneto-optical recording media of the present invention is superior to the prior one in corrosion resistance and heat stability. Further, there is an advantage to lower the Curie Point depend on elements added to Co and/or Pt.

When the same composition as in the present invention is formed into a single layer body, saturation magnetization is higher than residual magnetization and thus it cannot be converted into a perpendicular magnetization film. Instead, the aforesaid aim is achieved only when the medium is obtained in the multilayered form as disclosed in the present invention.

[EXAMPLES]

The present invention is illustrated below with reference to examples, but it should be construed that the present invention is in no way limited to those examples.

Example 1

Using Pt target and $Co_{95}Cr_5$ (atom%) alloy target, Pt layers each of which having the unit thickness of 10 Å and CoCr layers each of which having the unit thickness of 5 Å were successively laminated on a glass substrate by the simultaneous sputtering method. In the aforesaid process, the glass substrate rotated at a fixed speed to successively pass over the two targets.

The film thickness of each layer was regulated by means of adjusting the revolving speed of the substrate as well as the power supplied to the cathode.

The total thickness of $Co_{95}Cr_5$(atom%)/Pt multilayered film thereby obtained was about 1000 Å. By measurement of polar magneto-optical Kerr rotation angle of the magneto-optical recording medium thereby obtained by radiating incidental light of 400 nm wavelength to the magneto-optical recording medium, the value of polar magneto-optical Kerr rotation angle ($\theta k(400)Deg$) was determined to be 0.3 Deg. The reflectance was 0.65. The aforesaid magneto-optical recording medium was allowed to stand for 100 hours in atmosphere maintained at 80 °C and relative humidity of 80%, whereupon the value of polar magneto-optical Kerr rotation angle was measured again with the result that it was determined to be 0.3 Deg.

Example 2

Using Pd target and $Co_{95}Cr_5$ (atom%) alloy target, Pd layers each of which having the unit thickness of 10 Å and $Co_{95}Cr_5$ (atom%) layers each of which having the unit thickness of 5 Å were successively laminated on a glass substrate by the simultaneous sputtering method.

The total thickness of $Co_{95}Cr_5$/Pd multilayered film thereby obtained was about 1000 Å. Characteristics of the magneto-optical recording medium thereby obtained were measured, following the same procedure as described in Example 1. Results obtained are shown in Table 1.

Example 3

Using Co target and $Pt_{90}Nd_{10}$ (atom%) alloy target, Co layers each of which having the unit thickness of 5 Å and $Pt_{90}Nd_{10}$ (atom%) layers each of which having the unit thickness of 10 Å were successively laminated on a glass substrate by the simultaneous sputtering method.

The total thickness of $Co/Pt_{90}Nd_{10}$ multilayered film thereby obtained was about 1000 Å. Characteristics of the magneto-optical recording medium thereby obtained were measured, following the same procedure as described in Example 1. Results obtained are shown in Table 1.

Example 4

Using Pt target and $Co_{70}Pt_{30}$ (atom%) alloy target, Pt layers each of which having the unit thickness of 8 Å and $Co_{70}Pt_{30}$ (atom%) layers each of which having the unit thickness of 5 Å were successively laminated on a glass substrate by the simultaneous sputtering method.

The total thickness of $Co_{70}Pt_{30}/Pt$ multilayered film thereby obtained was about 1000 Å. Characteristics of the magneto-optical recording medium thereby obtained were measured, following the same procedure as described in Example 1. Results obtained are shown in Table 1.

## Example 5

Using $Co_{10}Pt_{90}$ (atom%) alloy target and $Co_{90}Cr_5$ (atom%) alloy target, $Co_{10}Pt_{90}$ (atom%) layers and $Co_{95}Cr_5$ (atom%) layers were successively laminated on a glass substrate by the simultaneous sputtering method.

The total thickness of $Co_{95}Cr_5/Co_{10}Pt_{90}$ multilayered film thereby obtained was about 1000 Å. Characteristics of the magneto-optical recording medium thereby obtained were measured, following the same procedure as described in Example 1. Results obtained are shown in Table 1.

## Example 6

Using Pt target and $Co_{70}Pd_{30}$ (atom%) alloy target, Pt layers each of which having the unit thickness of 11 Å and $Co_{70}Pd_{30}$ (atom%) layers each of which having the unit thickness of 5 Å were successively laminated on a glass substrate by the simultaneous sputtering method.

The total thickness of $Pt/Co_{70}Pd_{30}$ multilayered film thereby obtained was about 500 Å. Characteristics of the magneto-optical recording medium thereby obtained were measured, following the same procedure as described in Example 1. Results obtained are shown in Table 1.

## Example 7

Using Pt target and $Co_{70}Pt_{20}Pd_{10}$ (atom%) alloy target, Pt layers each of which having the unit thickness of 11 Å and $Co_{70}Pt_{20}Pd_{10}$ (atom%) layers each of which having the unit thickness of 5 Å were successively laminated on a glass substrate by the simultaneous sputtering method.

The total thickness of $Pt/Co_{70}Pt_{20}Pd_{10}$ multilayered film thereby obtained was about 1000 Å. Characteristics of the magneto-optical recording medium thereby obtained were measured, following the same procedure as described in Example 1. Results obtained are shown in Table 1.

## Example 8

Using Pt target and $Co_{95}Hf_5$ (atom%) alloy target, Pt layers each of which having the unit thickness of 11 Å and $Co_{95}Hf_5$ (atom%) layers each of which having the unit thickness of 5 Å were successively laminated on a glass substrate by the simultaneous sputtering method.

The total thickness of $Pt/Co_{95}Hf_5$ multilayered film thereby obtained was about 1000 Å. Characteristics of the magneto-optical recording medium thereby obtained were measured, following the same procedure as described in Example 1. Results obtained are shown in Table 1.

## Example 9

Using Pd target and $Co_{90}Tb_{10}$ (atom%) alloy target, Pd layers each of which having the unit thickness of 11 Å and $Co_{90}Tb_{10}$ (atom%) layers each of which having the unit thickness of 5 Å were successively laminated on a glass substrate by the simultaneous sputtering method.

The total thickness of $Pd/Co_{90}Tb_{10}$ multilayered film thereby obtained was about 500 Å. Characteristics of the magneto-optical recording medium thereby obtained were measured, following the same procedure as described in Example 1. Results obtained are shown in Table 1.

## Example 10

Using Pd target and $Co_{90}Gd_{10}$ (atom%) alloy target, Pd layers each of which having the unit thickness of 11 Å and $Co_{90}Gd_{10}$ (atom%) layers each of which having the unit thickness of 5 Å were successively laminated on a glass substrate by the simultaneous sputtering method.

The total thickness of $Pd/Co_{90}Gd_{10}$ multilayered film thereby obtained was about 500 Å. Characteristics of the magneto-optical recording medium thereby obtained were measured, following the same procedure as described in Example 1. Results obtained are shown in Table 1.

Example 11

Using $Co_{70}Pt_{25}Ti_5$ (atom%) alloy target and $Co_{70}Pt_{20}Tb_{10}$ (atom%) alloy target, $Co_{70}Pt_{25}Ti_5$ (atom%) layers each of which having the unit thickness of 11 Å and $Co_{70}Pt_{20}Tb_{10}$ (atom%) layers each of which having the unit thickness of 5 Å were successively laminated on a glass substrate by the simultaneous sputtering method.

The total thickness of $Co_{70}Pt_{25}Ti_5/Co_{70}Pt_{20}Tb_{10}$ multilayered film thereby obtained was about 500 Å. Characteristics of the magneto-optical recording medium thereby obtained were measured, following the same procedure as described in Example 1. Results obtained are shown in Table 1.

Example 12

Using Pt target and $Co_{80}Pt_{15}Cr_5$ (atom%) alloy target, Pt layers each of which having the unit thickness of 11 Å and $Co_{80}Pt_{15}Cr_5$ (atom%) layers each of which having the unit thickness of 5 Å were successively laminated on a glass substrate by the simultaneous sputtering method.

The total thickness of $Pt/Co_{80}Pt_{15}Cr_5$ multilayered film thereby obtained was about 500 Å. Characteristics of the magneto-optical recording medium thereby obtained were measured, following the same procedure as described in Example 1. Results obtained are shown in Table 1.

Example 13

Using $Pt_{70}Pd_{30}$ (atom%) alloy target and $Co_{95}Cr_5$ (atom%) alloy target, $Pt_{70}Pd_{30}$ (atom%) layers each of which having the unit thickness of 11 Å and $Co_{95}Cr_5$ (atom%) layers each of which having the unit thickness of 5 Å were successively laminated on a glass substrate by the simultaneous sputtering method.

The total thickness of $Pt_{70}Pd_{30}/Co_{95}Cr_5$ multilayered film thereby obtained was about 500 Å. Characteristics of the magneto-optical recording medium thereby obtained were measured, following the same procedure as described in Example 1. Results obtained are shown in Table 1.

Example 14

Using $Co_{95}Pt_3Tb_2$ (atom%) alloy target and $Co_3Pt_{95}Tb_2$ (atom%) alloy target, $Co_{95}Pt_3Tb_2$ (atom%) layers each of which having the unit thickness of 5 Å and $Co_3Pt_{95}Tb_2$ (atom%) layers each of which having the unit thickness of 10 Å were successively laminated on a glass substrate by the simultaneous sputtering method.

The total thickness of $Co_{95}Pt_3Tb_2/Co_3Pt_{95}Tb_2$ multilayered film thereby obtained was about 150 Å. Characteristics of the magneto-optical recording medium thereby obtained were measured, following the same procedure as described in Example 1. Results obtained are shown in Table 1.

Example 15

Using $Co_{95}Pd_3Tb_2$ (atom%) alloy target and $Co_3Pd_{95}Tb_2$ (atom%) alloy target, $Co_{95}Pd_3Tb_2$ (atom%) layers each of which having the unit thickness of 5 Å and $Co_3Pd_{95}Tb_2$ (atom%) layers each of which having the unit thickness of 10 Å were successively laminated on a glass substrate by the simultaneous sputtering method.

The total thickness of $Co_{95}Pd_3Tb_2/Co_3Pd_{95}Tb_2$ multilayered film thereby obtained was about 150 Å. Characteristics of the magneto-optical recording medium thereby obtained were measured, following the same procedure as described in Example 1. Results obtained are shown in Table 1.

Example 16

Using $Co_{95}Pd_3Tb_2$ (atom%) alloy target and $Co_3Pt_{95}Tb_2$ (atom%) alloy target, $Co_{95}Pd_3Tb_2$ (atom%) layers each of which having the unit thickness of 5 Å and $Co_3Pt_{95}Tb_2$ (atom%) layers each of which having the unit thickness of 10 Å were successively laminated on a glass substrate by the simultaneous sputtering method.

The total thickness of $Co_{95}Pd_3Tb_2/Co_3Pt_{95}Tb_2$ multilayered film thereby obtained was about 150 Å. Characteristics of the magneto-optical recording medium thereby obtained were measured, following the same procedure as described in Example 1. Results obtained are shown in Table 1.

Comparative Example 1

Using $Tb_{20}Fe_{80}$ (atom%) as the target, a $Tb_{20}Fe_{80}$ (atom%) layer having the unit thickness of 2000 Å was applied onto a glass substrate by the sputtering method . Characteristics of the magneto-optical recording medium thereby obtained were measured, following the same procedure as described in Example 1. Results obtained are shown in Table 1.

Comparative Example 2

Using $Tb_{20}Fe_{65}Co_{15}$ (atom%) as the target, a $Tb_{19}Fe_{65}Co_{16}$ (atom%) layer having the unit thickness of 2000 Å was applied onto a glass substrate by the sputtering method . Characteristics of the magneto-optical recording medium thereby obtained were measured, following the same procedure as described in Example 1 Results obtained are shown in Table 1.

Comparative Example 3

Using $Tb_{20}Fe_{80}$ (atom%) as the target, a $Tb_{20}Fe_{80}$ (atom%) layer having the unit thickness of 1000 Å was applied onto a glass substrate by the sputtering method . Characteristics of the magneto-optical recording medium thereby obtained were measured, following the same procedure as described in Example 1. Results obtained are shown in Table 1.

Comparative Example 4

Using $Tb_{20}Fe_{65}Co_{15}$ (atom%) as the target, a $Tb_{19}Fe_{65}Co_{16}$ (atom%) layer having the unit thickness of 1000 Å was applied onto a glass substrate by the sputtering method . Characteristics of the magneto-optical recording medium thereby obtained were measured, following the same procedure as described in Example 1. Results obtained are shown in Table 1.

# EP 0 449 252 A1

## Table 1

| | Examples | Incident light into glass [$\theta k$(400)Deg.] | R (400) | $\theta k$ (80°C, 80%RH, after 100 hrs.) |
|---|---|---|---|---|
| 1 | $Co_{95}Cr_5/Pt$ | 0.30 | 0.65 | 0.30 |
| 2 | $Co_{95}Cr_5/Pd$ | 0.30 | 0.65 | 0.30 |
| 3 | $Co/Pt_{90}Nd_{10}$ | 0.32 | 0.63 | 0.31 |
| 4 | $Co_{70}Pt_{30}/Pt$ | 0.27 | 0.65 | 0.27 |
| 5 | $Co_{95}Cr_5/Co_{10}Pt_{90}$ | 0.25 | 0.65 | 0.25 |
| 6 | $Pt/Co_{70}Pd_{30}$ | 0.30 | 0.65 | 0.30 |
| 7 | $Pt/Co_{70}Pt_{20}Pd_{10}$ | 0.30 | 0.65 | 0.30 |
| 8 | $Pt/Co_{95}Hf_5$ | 0.28 | 0.63 | 0.28 |
| 9 | $Pd/Co_{90}Tb_{10}$ | 0.30 | 0.65 | 0.30 |
| 10 | $Pd/Co_{90}Gd_{10}$ | 0.30 | 0.65 | 0.30 |
| 11 | $Co_{70}Pt_{25}Ti_5/Co_{70}Pt_{20}Tb_{10}$ | 0.28 | 0.62 | 0.28 |
| 12 | $Pt/Co_{80}Pt_{15}Cr_5$ | 0.30 | 0.66 | 0.30 |
| 13 | $Pt_{70}Pd_{30}/Co_{95}Cr_5$ | 0.32 | 0.64 | 0.32 |
| 14 | $Co_{95}Pt_3Tb_2/Co_3Pt_{95}Tb_2$ | 0.40 | 0.40 | 0.40 |
| 15 | $Co_{95}Pd_3Tb_2/Co_3Pd_{95}Tb_2$ | 0.25 | 0.40 | 0.25 |
| 16 | $Co_{95}Pd_3Tb_2/Co_3Pt_{95}Tb_2$ | 0.40 | 0.40 | 0.40 |
| | Comparative Examples | | | |
| 1 | $Tb_{20}Fe_{80}$ (2000Å) | 0.14 | 0.31 | indeterminable |
| 2 | $Tb_{19}Fe_{65}Co_{16}$ (2000Å) | 0.29 | 0.31 | indeterminable |
| 3 | $Tb_{20}Fe_{80}$ (1000Å) | 0.14 | 0.40 | 0 |
| 4 | $Tb_{19}Fe_{65}Co_{16}$ (1000Å) | 0.28 | 0.40 | 0 |

## Claims

1. In a magneto-optical recording medium having a magneto-optical recording layer, said magneto-optical recording layer being a laminated body having a periodical structure wherein the first and second films, varying in composition from each other, are alternately laminated, the improvement which resides in that the first film comprises Pt and the second film comprises $CoM^1$ wherein $M^1$ represents Pd, Pt, Cr or Hf.

2. In a magneto-optical recording medium having a magneto-optical recording layer, said magneto-optical recording layer being a laminated body having a periodical structure wherein the first and second films,

18

varying in composition from each other, are alternately laminated, the improvement which resides in that the first film comprises Pt and the second film comprises $CoM^2M^3$ wherein $M^2$ represents at least one element selected from a group consisting of Pt and Pd, and $M^3$ represents at least one element selected from the group consisting of the undermentioned elements (a) to (h):

(a) 3d transition elements other than Co,
(b) 4d transition elements other than Pd,
(c) 5d transition elements other than Pt,
(d) Rare earth elements,
(e) IIIB Group elements,
(f) IVB Group elements,
(g) VB Group elements, and
(h) VIB Group elements.

3. In a magneto-optical recording medium having a magneto-optical recording layer, said magneto-optical recording layer being a laminated body having a periodical structure wherein the first and second films, varying in composition from each other, are alternately laminated, the improvement which resides in that the first film comprises $PtM^4$ wherein $M^4$ represents at least one element selected from a group consisting of Pd and Au and the second film comprises $CoM^5$ wherein $M^5$ represents at least one element selected from the group consisting of the undermentioned elements (a) to (h):

(a) 3d transition elements other than Co,
(b) 4d transition elements,
(c) 5d transition elements,
(d) Rare earth elements,
(e) IIIB Group elements,
(f) IVB Group elements,
(g) VB Group elements, and
(h) VIB Group elements.

4. In a magneto-optical recording medium having a magneto-optical recording layer, said magneto-optical recording layer being a laminated body having a periodical structure wherein the first and second films, varying in composition from each other, are alternately laminated, the improvement which resides in that the first film comprises Pd, and the second film comprises $CoM^6$ wherein $M^6$ represents at least one element selected from a group consisting of Gd, Dy, Tb, Nd, Cr, Zr, Hf, Ta and Al.

5. In a magneto-optical recording medium having a magneto-optical recording layer, said magneto-optical recording layer being a laminated body having a periodical structure wherein the first and second films, varying in composition from each other, are alternately laminated, the improvement which resides in that the first film comprises $CoPtM^7$ wherein $M^7$ represents at least one element selected from the group consisting of the undermentioned elements (a) to (h):

(a) 3d transition elements other than Co,
(b) 4d transition elements,
(c) 5d transition elements other than Pt,
(d) Rare earth elements,
(e) IIIB Group elements,
(f) IVB Group elements,
(g) VB Group elements, and
(h) VIB Group elements, and the second film comprises $CoPtM^8$ wherein $M^8$, which is different from the above-mentioned $M^7$, represents at least one element selected from the group consisting of the undermentioned elements (a) to (h):

(a) 3d transition elements other than Co,
(b) 4d transition elements,
(c) 5d transition elements other than Pt,
(d) Rare earth elements,
(e) IIIB Group elements,
(f) IVB Group elements,
(g) VB Group elements
(h) VIB Group elements.

6. In a magneto-optical recording medium having a magneto-optical recording layer, said magneto-optical recording layer being a laminated body having a periodical structure wherein the first and second films, varying in composition from each other, are alternately laminated, the improvement which resides in that the first film comprises $PtM^9$ wherein $M^9$ represents at least one element selected from the group consisting of the undermentioned elements (a) to (h):
   (a) 3d transition elements,
   (b) 4d transition elements,
   (c) 5d transition elements other than Pt,
   (d) Rare earth elements,
   (e) IIIB Group elements,
   (f) IVB Group elements,
   (g) VB Group elements, and
   (h) VIB Group elements.
   and the second film consists essentially of Co.

7. In a magneto-optical recording medium having a magneto-optical recording layer, said magneto-optical recording layer being a laminated body having a periodical structure wherein the first and second films, varying in composition from each other, are alternately laminated, the improvement which resides in that the first and second films comprise at least one element selected from the group consisting of Fe and Co, at least one element selected from the group consisting of Pt, Pd and Au, and at least one element selected from the group consisting of the undermentioned elements (a) to (h):
   (a) 3d transition elements other than Fe and Co,
   (b) 4d transition elements other than Pd,
   (c) 5d transition elements other than Pt and Au,
   (d) Rare earth elements,
   (e) IIIB Group elements,
   (f) IVB Group elements,
   (g) VB Group elements, and
   (h) VIB Group elements.

8. The magneto-optical recording medium claimed in any claims of claim 1 to 7 which is characterized in that the film thickness of the aforementioned first film is 5 to 25 Å, the film thickness of the aforementioned second film is 3 to 15 Å and the total film thickness of the aforementioned magneto-optical recording layer is 50 to 1200 Å.

## DOCUMENTS CONSIDERED TO BE RELEVANT

EP 91104879.1

| Category | Citation of document with indication, where appropriate, of relevant passages | Relevant to claim | CLASSIFICATION OF THE APPLICATION (Int. Cl.5) |
|---|---|---|---|
| A | EP - A2 - 0 168 046 (HITACHI, LTD.) * Abstract; claim 1 * | 1-8 | G 11 B 11/10 G 11 B 13/04 H 01 F 10/16 |
| A | EP - A2 - 0 352 748 (HITACHI, LTD.) * Abstract; claims 1,7 * | 1-8 | |
| A | DE - A1 - 3 608 021 (RICOH CO. LTD) * Claim 14 * | 1-8 | |
| D,A | EP - A1 - 0 304 873 (SONY CORPORATION) * Abstract; claims 1,7 * | 1-8 | |

TECHNICAL FIELDS
SEARCHED (Int. Cl.5)

G 11 B 11/00
G 11 B 13/00
H 01 F 10/00
G 11 B  7/00

The present search report has been drawn up for all claims

| Place of search | Date of completion of the search | Examiner |
|---|---|---|
| VIENNA | 24-06-1991 | BERGER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P0401)